# EUROPÄISCHE PATENTANMELDUNG

(11) **EP 1 400 344 A1**
(43) Veröffentlichungstag der Anmeldung: **24.03.2004**
(21) Anmeldenummer: 03016453.7
(22) Anmeldetag: 21.07.2003
(51) Int. Cl.: B31B 1/08, F16L 59/02, F16L 59/14

(54) **Dämmmaterial für Rohrleitungen**

(30) Priorität: 18.09.2002 DE 10243358
(71) Anmelder: E. Missel GmbH & Co., 70736 Fellbach/Stuttgart (DE)
(72) Erfinder: Krist Dieter, D-71364 Winnenden (DE); Hanel, Bernd, D- 70736 Fellbach (DE)
(74) Vertreter: Manitz, Finsterwald & Partner GbR

(57) **Zusammenfassung**

Es wird ein Dämmmaterial für Rohrleitungen beschrieben, das eine das jeweilige Rohr mit Spiel umschließende Innenhülle mit integriertem Festigkeitsträger sowie eine bezüglich der Innenhülle beabstandete Außenhülle aus wasserundurchlässigem Verbundmaterial mit einem weiteren Festigkeitsträger umfaßt, wobei die zwischen Innenhülle und Außenhülle gelegene Dämmstoffschicht die im wesentlichen runde Außenkontur des Dämmmaterials bestimmt.

## Beschreibung

Die Erfindung betrifft ein Dämmaterial für Rohrleitungen, insbesondere für auf Rohbetondecken zu verlegende Rohrleitungen.

Ein Dämmmaterial dieser Art ist bekannt aus EP 0 106 328 B1. Dämmmaterialien dieser Art haben sich in der Praxis grundsätzlich bewährt. Zunehmende Anforderungen sowohl hinsichtlich der Dämmwirkung als auch hinsichtlich der Robustheit und Handhabbarkeit machen Verbesserungen erforderlich.

Aufgabe der Erfindung ist es, ein Dämmmaterial der eingangs genannten Art qualitätsmäßig weiter zu verbessern, seine Handhabung zu erleichtern und zu einer Beeinträchtigung der Dämmwirkung führende Beschädigungen, wie sie bei der Montage und insbesondere im rauhen Baustellenbetrieb auftreten können, auszuschließen.

Gelöst wird diese Aufgabe nach der Erfindung im wesentlichen durch eine das jeweilige Rohr mit Spiel umschließende Innenhülle mit zumindest einem integrierten Festigkeitsträger in Form einer flexiblen, reißfesten und wenig dehnbaren Faden- oder Netzstruktur, eine bezüglich der Innenhülle beabstandete, flexible Außenhülle aus wasserundurchlässigem Verbundmaterial mit wenigstens einer zumindest rissbegrenzenden Verstärkungslage, sowie einer eine zumindest im wesentlichen runde Außenkontur des Dämmmaterials bestimmende, ein- oder mehrlagige Dämmstoffschicht, die zwischen der Innhülle und der Außenhülle angeordnet und mit beiden Hüllen verbunden ist.

Durch die Verwendung von jeweils durch Festigkeitsträger verstärkten Außen- und Innenhüllen und deren Zusammenwirken über das zwischen diesen beiden Hüllen angeordnete Dämmstoffmaterial wird eine äußerst stabile Gesamtanordnung erhalten, die auch bei unsachgemäßer Behandlung weder von außen her noch bei der Rohreinführung von innen her so beschädigt werden kann, dass die Dämmeigenschaften in unzulässiger Weise beeinträchtigt werden.

Insbesondere die mit einem integrierten Festigkeitsträger ausgestattete Innenhülle, die rohrseitig vorzugsweise eine aus einer Folienschicht bestehende Gleitschicht aufweist, trägt dazu bei, dass die Handhabung des Dämmmaterials, insbesondere das Aufziehen des Dämmmaterials auf Rohrabschnitte erleichtert und ohne die Gefahr einer Beschädigung des Dämmmaterials durchgeführt werden kann. Dies spielt insbesondere dann in der Praxis eine wesentliche Rolle, wenn das Dämmmaterial über gekrümmte Bereiche eines Rohres gezogen bzw. geschoben werden muss, da in diesen Fällen gerade bei Rohren mit scharfkantigen Stirnflächen die Gefahr einer Dämmmaterialbeschädigung groß ist.

Die Gitter-, Netz- oder Gewebeverstärkung kann für die Innenhülle und die Außenhülle unterschiedlich gestaltet sein, so dass auch den unterschiedlichen Anforderungen Rechnung getragen wird.

Nach einer Ausgestaltung der Erfindung kann die Innenhülle mit in Axialrichtung verlaufenden Wellungen versehen sein, die sich durch ihre Aufweitbarkeit insbesondere an engen Rohrkrümmungen positiv beim Aufziehen der Dämmung auf das jeweilige Rohr auswirken können.

Weitere vorteilhafte Ausgestaltungen der Erfindung sind in den Unteransprüchen angegeben. Ein Ausführungsbeispiel der Erfindung wird anhand der Zeichnung erläutert.

Die einzige Figur der Zeichnung zeigt in schematischer Weise eine Querschnittsdarstellung eines erfindungsgemäßen Dämmmaterials für eine Rohrleitung.

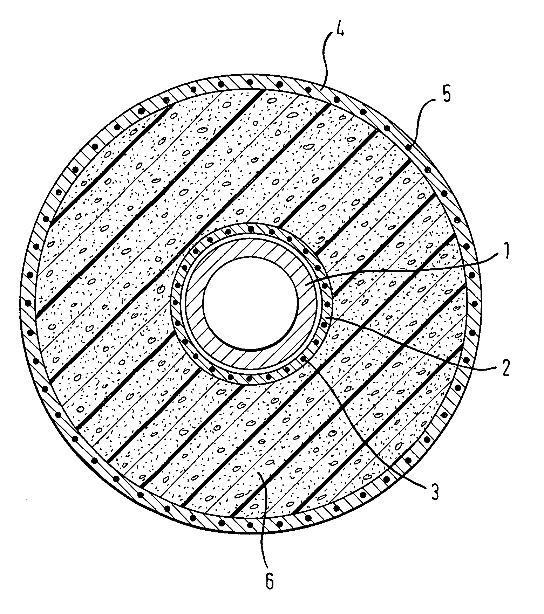

Das Dämmaterial nach Figur 1 dient zur Aufnahme einer insbesondere Warmwasser führenden Rohrleitung 1, welche mit Spiel im Dämmaterial aufgenommen ist.

Das Dämmmaterial besteht aus einer das jeweilige Rohr 1 mit vorgebbarem Spiel umschließenden Innenhülle 2, einer diese Innenhülle 2 umschließenden Außenhülle 4 und einem Dämmstoff 6, der zwischen Innenhülle 2 und Außenhülle 4 angeordnet ist, aus einem flexiblen Schaumstoff besteht und die runde Außenkontur der Dämmung festlegt.

Wesentlich ist im Rahmen der Erfindung, dass sowohl die Innenhülle 2 als auch die Außenhülle 4 jeweils einen integrierten Festigkeitsträger in Form einer flexiblen, im wesentlichen nicht dehnbaren Fadenstruktur aufweisen. Diese Verstärkungsstrukturen können gitter- oder netzförmig gestaltet sein oder aus einer Gewebeverstärkung bestehen. Hinsichtlich der Außenhülle wird auf diese Weise sichergestellt, dass auch im rauhen Baustellenbetrieb keine störenden Beschädigungen des Dämmmaterials auftreten können, da diese Verstärkungen zumindest rissbegrenzend wirken, während die integrierten Festigkeitsträger 3 der Innenhülle 2 sicherstellen, daß das Dämmmaterial auch von innen her bei eventuell unsachgemäßer Handhabung während des Aufziehens auf das jeweilige Rohr nicht durchstoßen werden kann, und zwar auch dann nicht, wenn das Dämmaterial über gekrümmte Rohre gezogen werden muss. Außerdem trägt diese spezielle Ausgestaltung der Innenhülle dazu bei, dass der Vorgang des Aufziehens des Dämmmaterials auf das jeweilige Rohr erleichtert wird, wozu insbesondere auch eine Gleitschicht in Form einer Folienschicht beitragen kann, welche rohrseitig an der Innenhülle 2 vorgesehen ist.

Insbesondere wenn das Dämmmaterial als Formteil für nachträgliche Dämmungen, insbesondere für T-Stücke, enge Krümmer und/oder Kreuzungen usw. ausgebildet ist, wird eine dem Rohrverlauf folgende, durchgehende Schlitzung des Dämmmaterials vorgesehen, wobei dem Verlauf des jeweiligen Schlitzes eine Schnellverschlussanordnung, insbesondere in Form eines Klettverschlusses, zugeordnet ist. Auch in diesem Falle wirkt sich das Zusammenspiel zwischen Außenhülle 4 und Innenhülle 2 vorteilhaft aus, da durch diese mit dem jeweiligen Dämmstoff 6 fest verbundenen Hüllen die Formstabilität gefördert wird und Beschädigungsgefahren ausgeschaltet werden.

## Patentansprüche

1. Dämmmaterial für Rohrleitungen, insbesondere für auf Rohbetondecken zu verlegende Rohrleitungen,
**gekennzeichnet durch**
eine das jeweilige Rohr (1) mit Spiel umschließende Innenhülle (2) mit zumindest einem integrierten Festigkeitsträger (39) in Form einer flexiblen, reißfesten und wenig dehnbaren Faden- oder Netzstruktur,
eine bezüglich der Innenhülle (2) beabstandete, flexible Außenhülle (4) aus wasserundurchlässigem Verbundmaterial mit wenigstens einer zumindest rissbegrenzenden Verstärkungslage (5),
sowie einer eine zumindest im wesentlichen runde Außenkontur des Dämmmaterials bestimmende, ein- oder mehrlagige Dämmstoffschicht (6), die zwischen der Innhülle (2) und der Außenhülle (4) angeordnet und mit beiden Hüllen (2, 4) verbunden ist.

2. Dämmmaterial nach Anspruch 1,
**dadurch gekennzeichnet,**
**dass** die im wesentlichen wenig dehnbare Faden- und Netzstruktur (3) der Innenhülle (2) aus einer Gitter- Netz- oder Gewebeverstärkung besteht.

3. Dämmmaterial nach Anspruch 1 oder 2,
**dadurch gekennzeichnet,**
**dass** die Innenhülle (2) und die Außenhülle (4) mit gleichartigen oder identischen Verstärkungslagen versehen sind.

4. Dämmmaterial nach einem der vorhergehenden Ansprüche,
**dadurch gekennzeichnet,**
**dass** die Dämmstoffschicht (6) aus einer oder mehreren flexiblen, insbesondere geschlossenzelligen Schaumstoffschichten besteht,
wobei diese Schichten insbesondere aus unterschiedlichen Materialien bestehen.

5. Dämmmaterial nach einem der vorhergehenden Ansprüche,
**dadurch gekennzeichnet,**
**dass** die Innenhülle (2) rohrseitig eine Gleitschicht, insbesondere in Form einer Folienschicht aufweist.

6. Dämmmaterial nach einem der vorhergehenden Ansprüche,
**dadurch gekennzeichnet,**
**dass** der Festigkeitsträger (3) in die Folienschicht integriert ist.

7. Dämmmaterial nach einem der vorhergehenden Ansprüche,
**dadurch gekennzeichnet,**
**dass** die Innenhülle (2) zumindest rohrseitig mit in Axialrichtung verlaufenden, in Radialrichtung elastischen Wellungen versehen ist.

8. Dämmmaterial nach Anspruch 7,
**dadurch gekennzeichnet,**
**dass** die gewellte Innenhülle (2) insbesondere an Rohrkrümmungen aufweitbar ist.

9. Dämmmaterial nach einem der vorhergehenden Ansprüche,
**gekennzeichnet durch**
eine dem Rohrverlauf folgende, durchgehende Längsschlitzung, wobei der jeweilige Längsschlitz über einen Schnellverschluss, insbesondere einen Klett- oder Klebverschluss, schließbar ist.

10. Dämmmaterial nach einem der vorhergehenden Ansprüche,
**gekennzeichnet durch**
eine Ausbildung als Formteil für nachträgliche Rohrdämmung, insbesondere für T-Stücke, enge Krümmer und/oder Kreuzungen.
